# EUROPEAN PATENT APPLICATION

(11) **EP 4 671 100 A1**
(43) Date of publication of application: **31.12.2025**
(21) Application number: 25186023.5
(22) Date of filing: 27.06.2025
(51) Int. Cl.: B62J 43/13, B62J 43/28, B62J 6/24, B62M 6/90, H01H 13/02, H01M 10/48

(54) **BATTERY HOUSING FOR AN ELECTRIC BIKE**

(30) Priority: 28.06.2024 NL 2038084
(71) Applicant: Koninklijke Gazelle N.V., 6951 BP Dieren (NL)
(72) Inventor: Van Nuland, Willem Toon, 6951 BP Dieren (NL); Kraaijvanger, Herman Martheus, 6951 BP Dieren (NL)
(74) Representative: De Vries & Metman

(57) **Abstract**

Battery housing for an electric bike. The battery housing, e.g., its cover, is provided with one or more viewing ports configured to align with the visual indicators of a battery received in the housing. The viewing ports can for example comprise an opening in the battery housing, in particular in its cover, and a light guide in the opening, extending inward into the battery housing.

## Description

The invention relates to a battery housing for an electric bike, and to an electric bike comprising such a battery housing.

Electric bikes use rechargeable batteries to power the electric motor. These rechargeable batteries are typically placed in a battery housing, which can for example be integrated in a tube of the bike's frame. These battery housings usually have a removable cover allowing to take the rechargeable out of the battery housing, **e.g.,** for recharging or replacement.

Batteries for electric bikes usually also have control elements and/or visual indicators, such as LED's to inform a user about certain parameters, such as battery level. However, such elements are hidden from view after placing the battery in a battery housing.

It is an object of the present invention to provide a battery housing that allows observation of visual indicators, in particular LED lights, of a battery positioned within the battery housing by the battery cover and/or operation of control elements of the covered battery.

The object of the invention is achieved with a battery housing configured to receive a matching battery with one or more visual indicators, the battery housing being provided with one or more viewing ports configured to align with the visual indicators of the battery received in the housing.

In a particular embodiment, at least one of the viewing ports comprises an opening in the battery housing and a light guide in the opening extending inward into the battery housing, in particular to a position of a visual indicator of a battery when it is positioned in the battery housing. These light guides can for example be rods or tubes of a transparent material, such as glass or a plastic such as polymethylmethacrylate (PMMA), typically having an index of refraction of about 1 to 2, e.g., about 1.5.

The battery housing will typically comprise an opening for insertion or removal of the battery, and an openable cover for closing the opening. In the closing position, the cover will connect to the border of the opening in a releasable manner, usually with a lock. The cover can for example be completely detachable from the opening of the battery housing. Generally, the cover is permanently attached to the battery, so the battery is placed in the housing jointly with the cover.

In a particular embodiment, the one or more of the viewing ports, such as light guides, can be provided in the cover.

The battery housing, in particular the battery cover, can for example comprise a control element and a transfer element for transferring activation of the control element to activation of a push button of a received battery. Such a transfer element can for example comprise a rod extending between the control element and a position of the push button of a received battery.

In a particular embodiment, the one or more light guides and/or the transfer element form part of an intermediate member. This intermediate member can for example have a surface profiled to match a connecting surface at an inner side of the battery cover aligning the light guides with the associated openings in the battery cover and/or aligning the transfer element with the control element. This way, only a single part needs to be mounted to position all the light guides, making assembly easier.

The intermediate member can for instance comprise a base having one side connecting to the light guides, the light guides extending from opposite sides of the base. The base can also be connected to a flexible arm of the intermediate member, connecting to the rod allowing resilient movement of the rod in its longitudinal direction.

The light guides will typically be arranged in a pattern following a pattern of the visual indicators of the battery received or to be received in the battery housing. To this end, the light guides can be parallel or they can be arranged in any other suitable configuration.

The invention also relates to an assembly of a battery housing as disclosed above and a battery having one or more control elements and/or visual indicators, such as LED's.

The battery housing can be used for electric bikes. The battery housing can be an integral part of one of the frame tubes of the electric bike, or it can be a separate part to be mounted to a frame tube or to any other suitable constructional part of the electric bike.

In this respect, electric bikes include any vehicle with a tubular frame, two or more wheels, and an electric drive either as a main drive or as an auxiliary drive for pedal assistance, such as e-bikes, cargo bikes with electric pedal assistance, electric motorcycles or scooters.

The invention is further explained with reference to the accompanying drawings showing exemplary embodiments.
Figure 1: shows an exemplary embodiment of an e-bike;
Figure 2: shows an assembly of a battery with a battery cover of the e-bike of Figure 1 in exploded view;
Figure 3: shows an intermediate member of the assembly of Figure 2;
Figure 4: shows a detail of the battery housing of Figure 2 in a perspective side view;
Figure 5: shows the detail of Figure 4 in cross section.

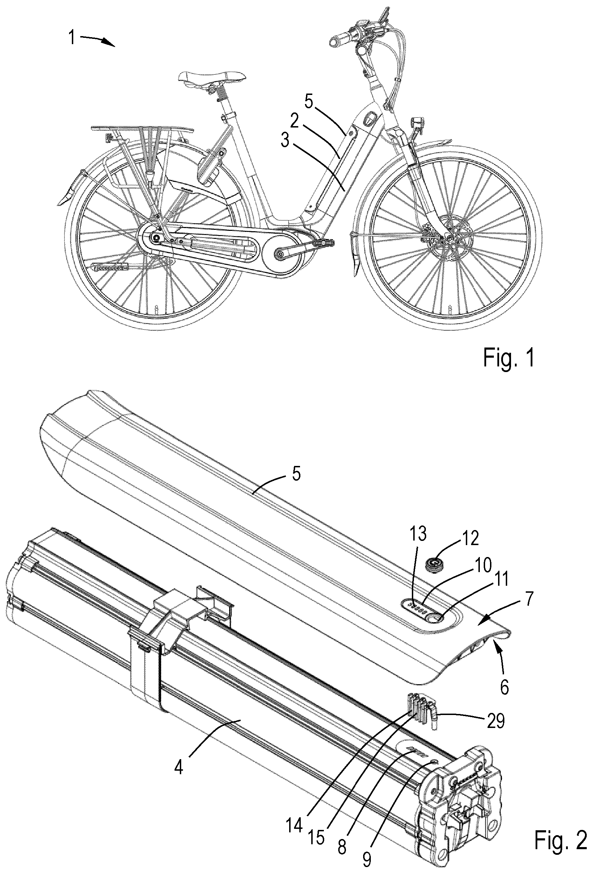

Figure 1 shows an electric bicycle 1 with a battery housing which is integral in the down tube 3. In other embodiment, the battery housing may be a separate on-tube part attached to the frame, or may be an integral part of another tube of the frame.

The battery housing 2 is configured to receive a matching rechargeable battery 4 as shown in Figure 2 and has a battery cover 5 with an inner surface 6 facing the battery 4, and an outer surface 7 opposite to the inner surface 6. The battery cover 5 is typically permanently attached to the battery 4, so they can jointly be positioned or removed. In other embodiments, the cover 5 and the battery 4 can be separate parts.

The battery 4 is of the type comprising an array of LED lights 8 as visual indicators, for example for battery level or error codes or the like. It also has a push button 9 to activate or inactivate the battery 4. These elements are hidden from view and out of a users' direct reach after positioning the battery cover 5.

To solve this problem, the battery cover 5 comprises an array of viewing ports 10, which are aligned with the LED lights 8 of the battery 4 when the battery 4 and the battery cover 5 are put in place, and an opening 11 for fitting a push control element 12 aligned with the push button 9 of the battery 4 when the battery 4 and the battery cover 5 are put in place.

Each viewing port 10 comprises an opening 13 in the battery cover 5 and a light guide 14 extending between the respective opening 13 and the associated LED light 8 of the battery 4. The light guides 14 are of a transparent material, such as glass or plastic, typically having an index of refraction of about 1.5.

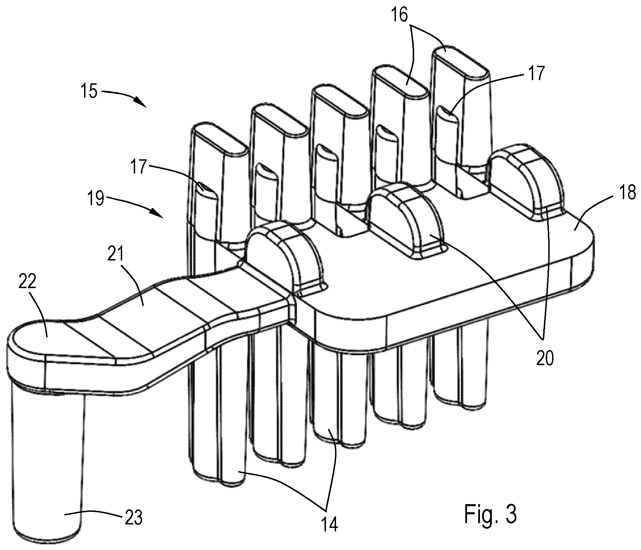

The light guides 14 are part of an intermediate member 15, as shown separately in more detail in Figure 3. This intermediate member 15 is a single part so the light guides can be mounted into the viewing ports 10 jointly in a single step. The intermediate member 15 can for example be injection moulded.

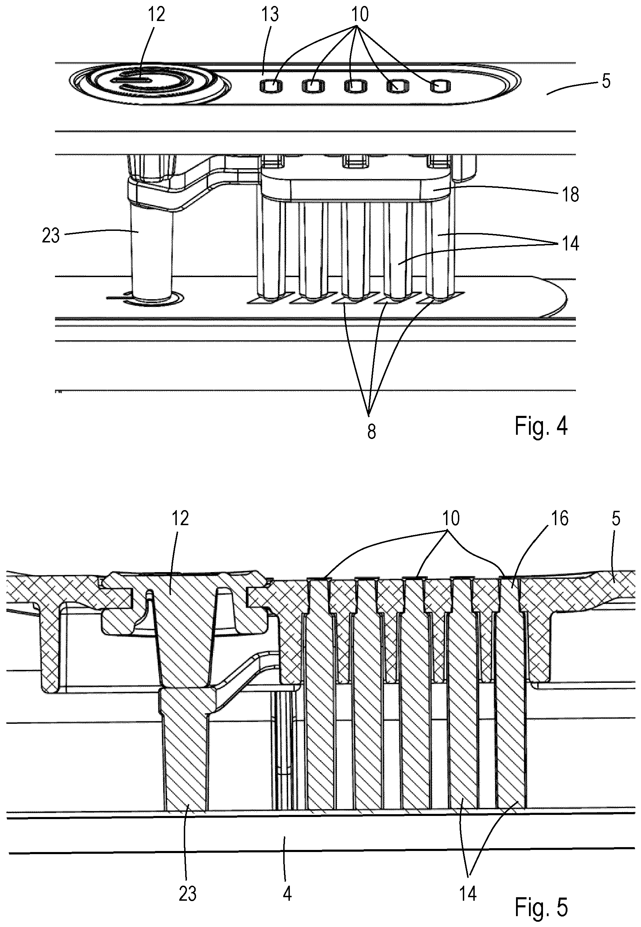

The light guides 14 have top ends 16 shaped to form a clamping fit in the openings 13 in the battery cover 5, as shown in Figure 5. Stops 17 prevent that the top ends 16 of the light guides 14 are pushed too deep into the respective opening 13. This way, the light guides 14 can accurately be positioned with the top ends 16 being flush with the outer surface 7.

The exemplary embodiment of the intermediate member 15 comprises a rectangular plate-shaped base 18 parallel to the inner and outer surfaces 6, 7 of the battery cover 5. The light guides 14 are connected to one side 19 of the base 18 and extending in a plane making an angle with the base 18, all light guides 14 being in an equidistant and parallel arrangement. Other arrangements can also be used, as long as it allows an effective transfer of signals from the visual indicators of the battery via the viewing ports.

The top side of the base 18 is provided with three projections or cams 20 spacing the base 18 from the inner surface 6 of the battery cover .

A flexible arm 21 extends from another side of the base 18 having an outer end 22 carrying a rod 23 which is essentially parallel to the light guides 14. When mounted, this rod 23 abuts the push button 9 of the battery 4 and is aligned with the push control element 12 of the battery cover 5, as shown in Figure 5. The flexible arm 21 allows movement of the rod 23 in its longitudinal direction. Pushing the push control element 12 of the battery cover 5 will push down the rod 23 and consequently it will push the push button 9 of the battery 4. This allows a user to activate or inactivate the battery 4 even when the battery cover 5 is in place.

## Claims

1. Battery housing for an electric bike, the battery housing comprising a battery insertion opening for insertion or removal of a matching battery with one or more visual indicators, and an openable cover for closing the battery insertion opening;
the cover being provided with one or more viewing ports configured to align with the visual indicators of the battery received in the housing,
wherein at least one of the viewing ports comprises an opening in the cover and a light guide in the opening, extending inward into the battery housing to one of the one or more visual indicators of a received battery.

2. Battery housing according to claim 1, the battery housing, e.g., the cover, comprising a control element and a transfer element for transferring activation of the control element to activation of a push button of a received battery.

3. Battery housing according to claim 2, wherein the transfer element comprises a rod extending between the control element and a position of the push button of a received battery.

4. Battery housing according to any one of the preceding claims, wherein the at least one light guide and/or the transfer element form part of an intermediate member, aligning the at least one light guide with the associated opening(s) in the battery housing and/or aligning the transfer element with the control element.

5. Battery housing according to claim 4, the intermediate member comprising a base connecting to the light guides, each light guide extending from both opposite sides of the base, and to a flexible arm connecting to the rod allowing movement of the rod in its longitudinal direction.

6. Electric bike comprising a battery housing according to any one of the preceding claims, wherein the battery housing is an integral part of a frame tube of the electric bike or mounted to a frame tube of the electric bike.

7. Intermediate member for use in a battery housing according to any one of claims 1 - 5, the intermediate member comprising a base and light guides each light guide connected to an edge of the base and extending from opposite sides of said edge, and optionally a flexible arm extending at one side of the base and connecting to a rod allowing movement of the rod in a direction parallel to the light guides.
